# EUROPÄISCHE PATENTANMELDUNG

(11) **EP 1 139 243 A1**
(43) Veröffentlichungstag der Anmeldung: **04.10.2001**
(21) Anmeldenummer: 00106948.3
(22) Anmeldetag: 31.03.2000
(51) Int. Cl.: G06F 17/60

(54) **Abrechnungs- und Kundenverwaltungssystem**

(71) Anmelder: LHS Group Inc., Atlanta, GA 30328 (US)
(72) Erfinder: Kappel, Jochen, 06140 Vence (FR); Markgraf, Josef, 63773 Goldbach (DE); Meadows, Michael, 17273 Sundbyberg (SE)
(74) Vertreter: Strobel, Wolfgang, Dipl.-Ing.

(57) **Zusammenfassung**

Die vorliegende Erfindung betrifft ein Abrechnungs- und Kundenverwaltungssystem (1), insbesondere für Kommunikationsdienste, mit mindestens einer Datenbank (7), in der Daten gespeichert und abgerufen werden können und die bevorzugterweise als Server ausgebildet ist. Das System (1) weist eine Mehrzahl von Clients auf, die mit der Datenbank (7) kommunizieren, und/oder mindestens einen Anwendungsserver mit zugehörigen Clients, der mit der Datenbank (7) kommuniziert, sowie ein entsprechendes Framework (10). Dem Benutzer des Systems (1) werden entsprechende Dienstleistungen gemäß den jeweils gewünschten Abrechnungs- und Kundenverwaltungsvorgängen zur Nutzung angeboten. Das System (1) ist dadurch gekennzeichnet, daß es eine verteilte Komponentenarchitektur aufweist, in der entsprechend den angebotenen Dienstleistungen Komponenten (5) ausgebildet sind, die über Schnittstellen direkt miteinander kommunizieren können.

## Beschreibung

Die vorliegende Erfindung betrifft ein Abrechnungs- und Kundenverwaltungssystem, insbesondere für Kommunikationsdienste, nach dem Oberbegriff des Anspruchs 1.

Abrechnungs- und Kundenverwaltungssysteme werden in allen Firmen eingesetzt, die Güter oder Dienstleistungen anbieten, bei denen die Höhe des Verbrauchs der Güter bzw. die Länge der Nutzung der Dienstleistungen die wesentlichen Kriterien für die Höhe des zu entrichtenden Preises durch den Endkonsumenten darstellen. Diese Firmen besitzen zudem meist eine sehr große Anzahl an Kunden (vgl. Strom-, Gas- und Wasserversorgung, Telekommunikation), was einen enormen Verwaltungsaufwand nach sich zieht. Abrechnungs- und Kundenverwaltungssysteme ermöglichen solchen Firmen zumeist eine einfache Verwaltung der enormen Menge an Kundendaten, berechnen nach entsprechenden Voreinstellungen die abzurechnenden Kosten und sind meist auch für die Rechnungserstellung als solche zuständig.

Bei den bekannten Abrechnungs- und Kundenverwaltungssystemen wird eine zentrale Datenbank eingesetzt, die insbesondere zur Speicherung aller Anwendungsdaten dient. Diese ist jedoch meist als relationale Datenbank ausgebildet und stellt so zugleich den Hauptserver des Systems dar. Über Clients, und insbesondere über GUls (Graphic User Interfaces), werden dem Anwender bestimmte Dienstleistungen des Kundenverwaltungs- und Abrechnungswesens ermöglicht. Dabei können zusätzliche Anwendungsserver zwischen die Clients und die Datenbank geschaltet sein. Jeder Client bzw. jeder Anwendungsserver ist mit der zentralen Datenbank verbunden, von der alle zur Anwendung nötigen Daten abgefragt und geändert werden können.

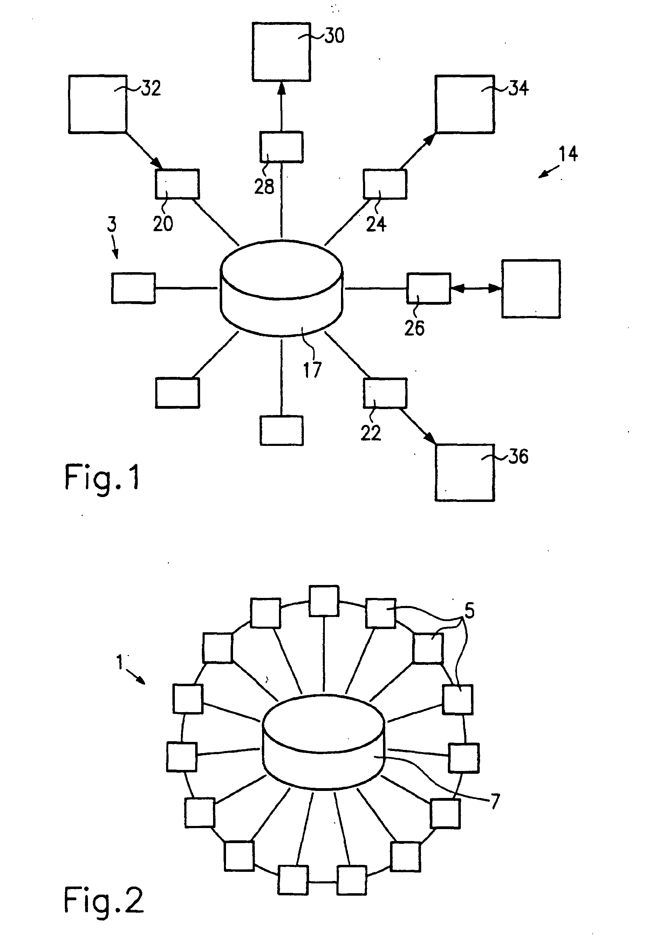

Zum besseren Verständnis wird im folgenden zunächst ein typisches Ausführungsbeispiel eines vorbekannten Abrechnungs- und Kundenverwaltungssystems im Bereich der Mobilfunk-Telekommunikation unter Bezugnahme auf Fig. 1 erläutert. An diesem Beispiel sollen die Abläufe innerhalb eines derartigen Systems und die Möglichkeiten, die das System liefern sollte, vereinfacht dargestellt werden.

Das System 14 weist eine zentrale, relationale Datenbank 17 auf, die gleichzeitig den Hauptserver des Systems 14 bildet und mit einer Mehrzahl von Modulen 3 über ein Netzwerk in Verbindung steht. Die Module 3 können jeweils entweder als Client oder als Anwendungsserver mit angehängten Clients ausgebildet sein und bieten dem jeweiligen Nutzer über GUls oder Programmierschnittstellen die Möglichkeit, im voraus festgelegte Dienstleistungen aus dem Abrechnungs- oder Kundenverwaltungsbereich in Anspruch zu nehmen. Die dazu nötigen Datensätze sind in Tabellen der zentralen Datenbank 17 gespeichert und werden von dort abgerufen.

Aktive Mobil-Vermittlungsstellen (MSC: Mobile Switching Center) 32 ermitteln und speichern Gesprächsdaten wie Ursprung, Ziel, Dauer und Dienst von Mobiltelefonaten. Die Informationen werden in das Abrechnungs- und Kundenverwaltungssystem 14 eingelesen und dort von geeigneten Abrechnungsmodulen 20 bearbeitet, welche die Gesprächsgebühren berechnen (Rating). Die dazu erforderlichen Daten werden aus der zentralen Datenbank 17 abgerufen, und nach Ablauf des Abrechnungsprozesses werden die neu ermittelten Daten wieder in der Datenbank 17 gespeichert. Diese Daten können wiederum von einem Rechnungserstellungsmodul 22 abgerufen werden, mit dessen Hilfe der Provider die Kundenrechnungen erstellen kann (Billing). Die Kundenverwaltung als solche (Customer Care) wird ebenfalls anhand mehrerer Module, die jeweils für unterschiedliche Dienstleistungen verwendet werden, durchgeführt. Beispielsweise können über ein Modul 24 Angaben über freie Ressourcen an SIM-Karten-Verkäufer 34 weitergeleitet werden. Ebenso benötigt ein Provider Module 26 zur Abwicklung von Geldgeschäften mit Banken und Kreditkartenunternehmen 36 sowie Module 28 für die Übermittlung von Daten an ein Teilnehmerregister (HLR: Home Location Register) 30 des Mobilfunknetzes, in dem Daten von Teilnehmern gespeichert werden.

Alle Module 3 sind direkt mit der zentralen Datenbank 17 verbunden, können untereinander jedoch nicht über direkte Schnittstellen kommunizieren. Die Schnittstellen zwischen den Modulen 3 sind üblicherweise überhaupt nicht explizit definiert. Statt dessen dient die zentrale Datenbank 17 als eine große implizite Schnittstelle zwischen allen verschiedenen Modulen 3, wodurch eine Vielzahl unnötiger interner Unterabhängigkeiten verursacht wird. Die Schnittstelle wird demnach durch einen Satz an Datenbanktabellen dargestellt. In derartigen Systemen 14 wird die Datenbank 17 außerdem zumeist auch als Server dazu verwendet, die Geschäftslogik in den verschiedenen Modulen 3 zu konfigurieren, dient neben der Datenspeicherung zusätzlich als Schnittstelle zu externen Systemen und zur Kommunikation zwischen den Modulen 3.

Im Telekommunikationsbereich sind in den letzten Jahren durch die rasante Entwicklung neuer Technologien (Handy, WAP-Handy etc.) extrem große Veränderungen innerhalb kürzester Zeiten zu verzeichnen. Da zudem der Markt für den freien Wettbewerb geöffnet ist, werden potentielle Kunden (Subscriber) von vielen Anbietern (Providern) immer stärker umworben. Daher ist es für einen Provider unumgänglich, Veränderungen flexibel Rechnung zu tragen und schnell auf die Erfordernisse des Marktes einzugehen. Im selben Maße steigen mit der Anzahl an Subscribern und der Vielfalt der technologischen Möglichkeiten auch die Anforderungen an Abrechnungs- und Kundenverwaltungssysteme.

Nachteilig an den vorbekannten Systemen ist, daß für Modifikationen oder Erweiterungen bei Änderungen im Anspruchsprofil des Systemnutzers immer der Code des entsprechenden Systems geändert werden muß. Dadurch entstehen sowohl erhöhte Personalkosten als auch eine enorme Verzögerung bei der Anpassung des Systems an die Markterfordernisse.

Der vorliegenden Erfindung liegt daher die Aufgabe zugrunde, ein Abrechnungs- und Kundenverwaltungssystem, insbesondere für Kommunikationsdienste, zu schaffen, bei dem Änderungen oder Erweiterungen des Systems aufgrund geänderter Wünsche des Systemnutzers möglichst schnell mit möglichst geringem Programmieraufwand durchgeführt werden können.

Diese Aufgabe wird durch die Merkmale des Anspruchs 1 gelöst.

Dadurch, daß das System eine verteilte Komponentenarchitektur aufweist, in der entsprechend den angebotenen Dienstleistungen Komponenten ausgebildet sind, die über Schnittstellen direkt miteinander kommunizieren können, wird eine flexible Konfiguration der Geschäftslogik ermöglicht, so daß Kundenwünschen mit einem Minimum an Implementationsveränderungen nachgekommen werden kann. Zudem läßt sich das System äußerst flexibel und leicht an eine Erhöhung der Anzahl der zu verarbeitenden Daten anpassen.

Vorteilhafterweise ist das System in mindestens zwei hierarchisch angeordnete Schichten (Layers) mit zunehmendem Abstraktionsgrad unterteilt. Jede Schicht isoliert die über ihr liegende Schicht nach unten, so daß der darüberliegenden Schicht Implementierungsdetails der darunterliegenden Schichten verborgen bleiben. In der bevorzugten Ausführungsform des erfindungsgemäßen Abrechnungs- und Kundenverwaltungssystems ist das System unterteilt in Basisschicht (Base Layer), allgemeine Schicht (Common Layer), technische Unterstützungsschicht (Technical Services Layer), Anwendungsschicht (Application Layer) und Geschäftsschicht (Business Layer).

Besonders vorteilhaft macht es sich bemerkbar, daß das System in mindestens zwei hierarchisch angeordnete Ebenen (Tiers) entsprechend den technischen Aufgaben unterteilt ist. In verschiedenen logischen Ebenen können Prozesse gleichzeitig und unabhängig voneinander ablaufen; zudem ist eine noch feinere Einteilung in physikalische Ebenen möglich. In der bevorzugten Ausführungsform des erfindungsgemäßen Abrechnungs- und Kundenverwaltungssystems ist das System unterteilt in Präsentationsebene (Presentation Tier), Anwendungsebene (Application Tier), Meta-Anwendungsebene (Meta-Application Tier), Domainebene (Domain tier), Persistenzebene (Persistence tier) und Datenbankebene (Database Tier).

Über die Meta-Anwendungs-Ebene (Meta-Application Tier) werden einer Anwendung innerhalb des Systems vorteilhafterweise Mittel zur Verfügung gestellt, um sich selbst zu beschreiben. Dies erlaubt eine dynamische (d.h. zur Laufzeit durchführbare) Konfiguration des Verhaltens der einzelnen Komponenten.

Besonders vorteilhaft weist das System ein Meta-Anwendungs-Dictionary (Meta-Application Dictionary) auf, wodurch der Programmieraufwand bei Änderungen auf Serverseite sehr gering gehalten werden kann.

In einer vorteilhaften Weiterbildung weist das System Einrichtungen auf, die das Schnittstellenmodell des Servers auf der Clientseite zur Verfügung stellen und damit die eingesetzte Kommunikationstechnologie vor einem Client-Entwickler verbergen.

Vorteilhafterweise bietet das System definierte Schnittstellen und Mechanismen zur Anfrageverteilung an, so daß mehrere gleichartige Anwendungsserver dem System hinzugefügt werden können, wodurch die mögliche Anzahl an zu verarbeitenden Daten mit geringem Aufwand nahezu beliebig erhöht werden kann, ohne die Verarbeitungsgeschwindigkeit zu beeinträchtigen.

Das System bietet in vorteilhafter Weise die Möglichkeit, Komponenten auszutauschen oder hinzuzufügen, so daß das System nicht veraltet und auf einfache Weise andere oder zusätzliche Dienstleistungen anbieten kann, ohne daß das komplette System ausgetauscht werden muß oder tiefgreifende Codeänderungen vorgenommen werden müssen. Somit ist auch die Erstellung von Upgrades relativ kostengünstig und einfach.

Die Möglichkeit der Erweiterung von Klassen und/oder des Hinzufügens neuer Klassen liefert den Vorteil, eine Komponente während der Ausführung unter Verwendung von Meta-Anwendungs-Einrichtungen verändern zu können.

Vorteilhafterweise wird die Arbeitsteilung innerhalb des Systems dadurch gefördert, daß die Datenbank in eine Vielzahl von unabhängigen Datenbankabschnitten aufgeteilt ist und/oder mehrere voneinander getrennte Datenbanken existieren, die jeweils mit lediglich einer Komponente kommunizieren.

Vorteilhaft stellt das System Mechanismen zur Verfügung, die ein über Komponenten verteiltes Transaktions- und Speichermanagement ermöglichen, wodurch die Robustheit und Zuverlässigkeit des Gesamtsystems sichergestellt wird.

Weitere Einzelheiten, Merkmale und Vorteile der Erfindung ergeben sich aus der nachfolgenden Beschreibung unter Bezugnahme auf die Zeichnungen. Darin zeigt:
- Fig. 2: eine schematische Darstellung des Aufbaus einer Ausführungsform des erfindungsgemäßen Abrechnungs- und Kundenverwaltungssystems;
- Fig. 3: eine schematische Darstellung der systeminternen Architektur einer bevorzugten Ausführungsform des erfindungsgemäßen Abrechnungs- und Kundenverwaltungssystems mit der Unterteilung in Schichten mit zunehmendem Abstraktionsgrad und in Ebenen entsprechend den technischen Aufgaben;
- Fig. 4: eine schematische Darstellung der Kommunikationsmöglichkeiten zwischen Servern und Clients in der bevorzugten Ausführungsform des erfindungsgemäßen Abrechnungs- und Kundenverwaltungssystems von Fig. 3; und
- Fig. 5: schematische Darstellungen des Aufbaus eines vorbekannten Systems, einer ersten und einer zweiten Ausführungsform des erfindungsgemäßen Abrechnungs- und Kundenverwaltungssystems.

In Fig. 2 ist ein schematisches Modell einer ersten Ausführungsform des erfindungsgemäßen Abrechnungs- und Kundenverwaltungssystems 1 dargestellt. In diesem System 1 dient eine Datenbank 7 lediglich zur permanenten Speicherung von Daten, die später wieder abgerufen werden können. Die übrigen oben genannten Funktionen von Datenbanken 17, die in vorbekannten Systemen 14 eingesetzt werden, werden nun größtenteils von der Anwendungslogik übernommen. Entsprechend der jeweils angebotenen Dienstleistungen im Bereich des Abrechnungsbzw. Kundenverwaltungswesens sind Komponenten 5 ausgebildet, die miteinander. über gemeinsame Schnittstellen kommunizieren können und nicht die Datenbank 7 als Schnittstelle verwenden müssen. Damit wird ein schnellerer Informationsaustausch zwischen den einzelnen Anwendungen ermöglicht, und durch die Abtrennung der Anwendungslogik aus der Datenbank 7 eine Struktur erreicht, die flexibel, erweiterbar und für eine Verarbeitung von großen Datenmengen geeignet ist. Veränderungen oder Erweiterungen des Systems 1 können dabei ohne großen Programmieraufwand vorgenommen werden. Durch diese Struktur ist es möglich, jedes Problem nur einmal zu lösen, und die Lösung auf einfache Weise für alle Komponenten 5 des Systems 1 verfügbar zu machen. Gleichzeitig ist für nahezu jede implementierte Lösung sichergestellt, daß sie nicht nur ein bestimmtes festgelegtes Problem löst, sondern immer eine Kategorie von Problemen.

Zur besseren Verdeutlichung des Begriffs "Komponente" in der Praxis soll im folgenden an einem Beispiel aus dem Telekommunikationsbereich die Aufteilung der Dienstleistungen im Bereich Kundenverwaltung in einzelne Komponenten 5 dargestellt werden. Eine Möglichkeit der Einteilung des Systems 1 liefert etwa folgende Komponenten 5:
Risk Management,
Fraud Management,
Trouble Ticket Management,
Address Management,
Accounts Receivable,
Document Management,
Task Management,
Order Management,
Product Management und
Inventory Management.

Mit Hilfe der Komponente "Risk Management" kann der Systemnutzer die Kreditwürdigkeit von Kunden überprüfen. Die Komponente "Fraud Management" wird zur Betrugsdetektion eingesetzt. Aufgedeckt werden dabei Unregelmäßigkeiten oder starke Abweichungen vom üblichen Verhalten des Kunden, etwa wenn eine hohe Anzahl an Auslandsgesprächen bei einem Kunden festgestellt wird, der bisher nie ins Ausland telefoniert hat. In der Komponente "Trouble Ticket Management" werden Beschwerden von Kunden und Störungsmeldungen vom Netz selbst registriert und bearbeitet. Mit Hilfe der Komponente "Address Management" wird ein Adressregister verwaltet, das die Prüfung der Plausibilität einer Adresse erlaubt. Die Komponente "Accounts Receivable" kann als eine Art Schuldbuchhaltungskomponente aufgefaßt werden. Mit ihrer Hilfe werden Zahlungseingänge registriert, offene Rechnungen aufgedeckt und Konten ausgeglichen. Die Komponente "Document Management" steht zur Verwaltung von Kundendokumenten (Briefe, Faxe etc.) bereit. Durch die Dienstleistungen der Komponente "Task Management" werden nach Eingang von Aufträgen die entsprechenden Arbeitsaufträge erteilt. Die Komponente "Order Management" ist für Auftragsbearbeitung und Kundenverwaltungsdienstleistungen zuständig. Mit Hilfe der Komponente "Product Management" kann der Endverbraucher über die Verfügbarkeit von Produkten und über Preislisten informiert werden. Die Komponente "Inventory Management" ist für die Bestandsführung zuständig, d.h. mit ihrer Hilfe ist eine Verwaltung der vergebenen und freien Telefonnummern, SIM-Karten oder anderer Gegenstände möglich. Jede der genannten Komponenten 5 erfüllt eine relativ große Anzahl an Dienstleistungen. Wie bereits oben erwähnt können die Komponenten 5 über direkte Schnittstellen Daten untereinander austauschen. Wenn also beispielsweise die Komponente "Accounts Receivable" spezielle Kundendaten benötigt, greift sie nicht mehr auf Daten aus der Datenbank zurück, sondern erhält die erforderlichen Daten direkt von der Komponente "Order Management" oder entsprechenden anderen Komponenten.

Das Komponentenmodell für ein Abrechnungs- und Kundenverwaltungssystem 1 setzt voraus, daß eine grundlegende Funktionalität in einem zentralisierten Framework 10 verfügbar ist. Jede einzelne Komponente 5 ist von allen anderen Komponenten unabhängig. Allerdings sind die Komponenten angewiesen auf einen Satz von Dienstleistungen, um korrekt arbeiten zu können. Diese benötigten Dienstleistungen können auch von Komponenten anderer Hersteller geliefert werden. Dann ist es möglich, diese in ein System mit den systemeigenen Komponenten zu integrieren.

Das vorliegende System 1 ist jedoch nicht als rein dienstleistungsbasierendes Modell ausgebildet, sondern weist auch etliche Elemente eines eher objektorientierten Modells auf. Auf Einzelheiten wird später noch genauer eingegangen.

Es existieren zahlreiche Definitionen des Begriffs "Komponente" in der objektorientierten Programmierung. Diejenige, die den in der Praxis im vorliegenden Abrechnungs- und Kundenverwaltungssystem 1 verwendeten Komponenten 5 am nächsten kommt, lautet:

*"Eine Komponente ist eine Konstruktionseinheit mit vertraglich spezifizierten Schnittstellen und (wenn möglich) lediglich expliziten Kontextabhängigkeiten*. *Eine Softwarekomponente kann unabhängig eingesetzt werden und ist Gegenstand für eine zusammengesetzte Konstruktion mit Produkten Driffer*."

Die Hauptaspekte dieser Definition sind, daß eine Komponente 5 unabhängig von anderen Komponenten aufgestellt und eingesetzt werden kann, daß eine Komponente 5 von anderen Anbietern verwendet werden kann, um Abrechnungs- oder Kundenverwaltungssysteme zu bilden, und daß eine Komponente 5 lediglich Schnittstellen beinhaltet, d.h. keinen Zustand im üblichen Sinne des Wortes aufweist, obwohl eine Komponente 5 Eigenschaften haben kann und bestimmte explizite Ansprüche innerhalb eines Kontexts an ihren Einsatz stellt.

Die Komponenten 5 im vorliegenden System 1 sind in der Regel relativ umfassend. Das folgt daraus, daß eine Komponente 5 unabhängig innerhalb eines bestimmten Kontexts eingesetzt werden kann und daher ausreichend abgeschlossen sein muß. Allerdings sind auch Komponenten 5 mit lediglich einer Schnittstelle möglich.

Komponentenschnittstellen sind in erster Linie dienstleistungsbasierend. Unter der Voraussetzung, daß eine Komponente 5 keinen Zustand besitzt, liefern die Schnittstellen, die von einer Komponenteninstanz geschaffen werden, Dienstleistungen und senden keine Information über den Status der Komponente 5 zurück. Die Anzahl der Dienstleistungen bzw. Schnittstellen, die von einer Komponente 5 geliefert werden, muß der Zahl entsprechen, die nötig ist, um den Satz an Verhalten vollständig zu veröffentlichen, der innerhalb der Komponente 5 zusammengefaßt ist.

Wie bereits oben erwähnt, verwendet das vorliegende Komponentenmodell in erster Linie Dienstleistungen, insbesondere um den Einsatz von Komponenten 5 mit Komponenten anderer Hersteller zu ermöglichen. Andererseits verwendet das vorliegende Abrechnungs- und Kundenverwaltungssystems 1 zwischen den für dieses System entwickelten Komponenten 5 zusätzlich eine traditionellere, objektorientierte Modellmöglichkeit, bei der Komponenten 5 ihre internen Klassen für den Gebrauch durch andere Komponenten veröffentlichen, was eher einer Peer-to-Peer-Architektur entspricht.

Um Clients direkten Zugang zu den Objekten innerhalb einer Komponente 5 und deren Benutzung zu ermöglichen, wird eine zusätzliche Lösung mit Peer-to-Peer-Objekten angeboten, so daß GUI-Entwickler auf einfache Weise mit modernen Werkzeugen arbeiten können, die auf einem model-view-artigen Pattern basieren.

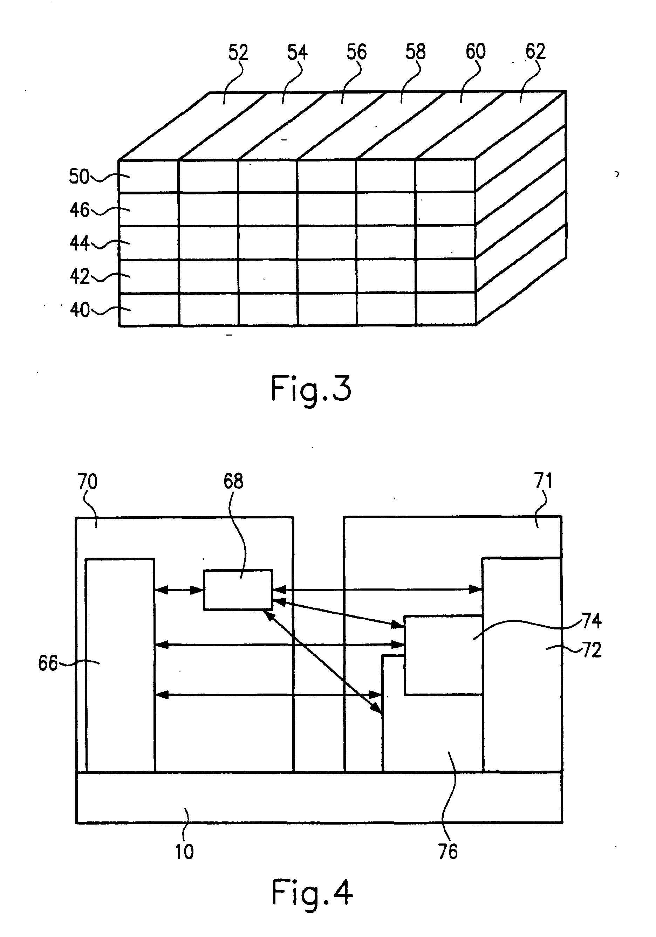

Die Komponenten 5 existieren also als einzelne abgeschlossene Einheiten innerhalb eines Systems. Die technische Grundlage für Ausführung und Kommunikation wird durch ein Framework 10 geliefert. Das Framework 10 ist Teil des gesamten Systems 1, das durch die geschäftsspezifische Logik komplettiert wird. Details über die Architektur des Systems 1 werden in der Beschreibung zu Fig. 3 erläutert.

Komponenten 5 kommunizieren miteinander, wobei sie veröffentlichte Dienstleistungen verwenden, besitzen aber ebenso Anforderungen an den Kontext, d.h. das ganze Verhalten, auf das eine Komponente 5 angewiesen ist, und das nicht in der Komponente 5 selbst implementiert ist, kann von anderen Komponenten oder vom Framework stammen. Ein Hauptmerkmal des Frameworks betrifft die Abgeschlossenheit, d.h. das Framework liefert den Behälter für die Ausführung einer Komponente 5. Außerdem erlaubt die Struktur des Komponentendesigns das einfache Packen von Anwendungselementen zum Zwecke der Abgeschlossenheit.

Die Struktur der Komponentensoftware ist daher folgendermaßen: Geschäftsdomainklassen werden in Pakete gruppiert, wobei ein Paket eine relativ feine logische Domain darstellt. Diese Pakete werden in Komponenten 5 gruppiert, so daß Pakete in einer Komponente 5 Klassen enthalten, die sich bis zu einem gewissen Grad gegenseitig benutzen, während Pakete in getrennten Komponenten 5 sich gegenseitig so wenig wie möglich benutzen. Schließlich werden Komponenten 5 zusammen in Servern gruppiert. Diese Gruppierung kann freigestellt sein, wobei es günstig ist, wenn Komponenten 5, die oft miteinander kommunizieren, im selben Server zusammengefaßt sind. Zur Verbindung mit fremden Frameworks ist es nötig, so viele Abhängigkeiten als möglich zwischen der Ausführungsumgebung und einer Komponente 5 zu entfernen. Daher benötigt jede Komponente 5 ihre eigene globale AbstractFactory-lnstanz; dies kann nicht pro Server geschehen, da es nicht garantiert ist, daß die Komponente 5 innerhalb dieses Servers laufen wird.

Eines der Hauptkonzepte im Framework, die es zu einem Komponentenframework machen, ist die AbstractComponent-Klasse. Diese Klasse beinhaltet die Attribute und das Verhalten, die allen Komponenten 5 gemeinsam sind. Spezifische Komponenten 5 sind Unterklassen dieser Klasse. Da die Dienstleistungen, die von einer Komponente 5 geliefert werden, in Transaktionen involviert sind, und vielfache Komponentendienstleistungen in einer Transaktion verwickelt sein können, ist die AbstractComponent-Klasse transaktional.

Die Unterklassen der AbstractComponent-Klasse, die eigentlichen Komponenten 5, enthalten alle Dienstleistungen, die für die Komponente 5 spezifisch sind. Ein weiteres wesentliches Merkmal jeder Unterklasse ist eine Instanz einer Fassadenklasse für jede externe Komponente, mit der die Komponente 5 kommuniziert.

Dienstleistungen an den Komponentengrenzen bzw. Dienstleistungen, die in anderen Komponenten implementiert sind, werden intern mittels Fassadenobjekten modelliert. Die Dienstleistungen in den Fassaden sind diejenigen, die die Komponente 5 benötigt, um zu funktionieren. Beispielsweise weist Komponente "A" intern eine "B"-Fassadeninstanz und eine "C"-Fassadeninstanz auf, wenn sie Schnittstellen in den Komponenten "B" und "C" verwendet. Das Design und die Implementation der Komponente "A" können dann größtenteils unabhängig von den Komponenten "B" und "C" ausgeführt werden. Wenn die Komponenten 5 eingesetzt werden, müssen die Dienstleistungen in den Fassaden in geeignete Dienstleistungen in anderen Komponenten abgebildet werden.

In einer bevorzugten Ausführungsform des Abrechnungs- und Kundenverwaltungs-systems 1 sind diese Fassaden derart implementiert, daß das Mappen einer Fassadendienstleistung zu einer eigentlichen Komponentendienstleistung ohne Änderung des Codes ausgeführt werden kann. Aus diesem Grund existiert eine abstrakte Klasse, die generelles Verhalten beinhaltet, die AbstractFacade-Klasse. Sowohl für veröffentlichte Domainobjekte als auch für Komponenten 5 unterstützt das Framework 10 Transaktionen zwischen Komponenten 5. Für Dienstleistungspropagation von Komponente zu Komponente wird implizite Propagation verwendet. Im Bereich Speicherverwaltung werden die Transaktionskontexte für nicht transaktionsbezogene Zwecke verwendet.

Zusammenfassend läßt sich nochmals feststellen, daß die hier dargestellte bevorzugte Ausführungsform des Abrechnungs- und Kundenverwaltungssystems 1 zum einen Dienstleistungen in Komponentenfassaden verwendet, wenn Dienstleistungen für externe Komponenten geliefert werden müssen. Ebenso veröffentlichen jedoch Komponenten 5 ihre internen Klassen für die Benutzung durch andere systeminterne Komponenten 5.

In Fig. 3 ist die Einteilung des Systems 1 in hierarchisch angeordnete Schichten (Layers) mit zunehmendem Abstraktionsgrad und in Ebenen (Tiers) entsprechend den technischen Aufgaben unterteilt. Die Schichten und Ebenen in der Architektur des Systems 1 liefern eine zweidimensionale Matrix. Allerdings ist diese Unterteilung in der Paketstruktur des Frameworks 10 nicht explizit repräsentiert.

Jede Schicht (Layer) ist von den komplizierten Belangen der darunterliegenden Schichten isoliert, so daß eine Kommunikation zwischen den Schichten nur mittels Benutzung von Standardschnittstellen implementiert wird. Dadurch wird ein hoher Grad an Flexibilität und Unabhängigkeit gewährleistet.

In einer bevorzugten Ausführungsform ist das System 1 in fünf Schichten unterteilt. Die unterste Basisschicht (Base Layer) 40 beinhaltet dabei Klassen, die grundlegendes Verhalten liefern, wie Systemressourcen, Betriebssystem und hardware-spezifische Klassen. Die Schicht beinhaltet auch das Verhalten, das von benutzter Drittsoftware erlangt wird. In der bevorzugten Ausführungsform sind hierbei insbesondere die Grundlagen von CORBA, einer gemeinsamen Standardarchitektur für Objektanforderungsvermittler, sowie von TopLink, einer objektsbezogenen Einrichtung zum Abbilden, beinhaltet. Als Programmiersprache wird in dieser Ausführungsform Java verwendet.

In der darüber angeordneten allgemeinen Schicht (Common Layer) 42 sind Abstraktionen von Klassen der Basisschicht 40 sowie Klassen beinhaltet, die allgemeine Einrichtungen für alle Schichten und Ebenen liefern. Darin sind auch Elemente für das Mitprotokollieren (Logging) und für die Fehlerbehandlung (Exception handling) beinhaltet.

Darüber angeordnet ist die technische Unterstützungsschicht (Technical Services Layer) 44, die Klassen beinhaltet, die software-technische Dienste anbietet.

Die darüber liegende Anwendungsschicht (Application Layer) 46 enthält alle Klassen und das Verhalten für eine dynamische Definition der Elemente einer Anwendung bzw. einer Komponente 5 auf einem Meta-Level. Instanzen dieser Klassen werden bei Interaktionen mit einer echten Anwendung verwendet. Die Dienste der technischen Unterstützungsschicht 44 werden zu einer abstrakten Anwendung zusammengefaßt und Mechanismen zur Beschreibung der Elemente der Domainebene 58 auf einer Meta-Ebene erlaubt. Die Anwendungsschicht 46 beinhaltet die Klassen, die den höchsten Level an Abstraktion im System repräsentieren, beispielsweise die Factory, die verschiedene Dienstleistungen von den darunterliegenden Schichten verwendet, wie etwa Transaktions- und Persistenzunterstützung.

Die Gesamtheit der Elemente von der Basisschicht 40 bis hin zu Teilen der Anwendungsschicht 46 kann auch als (technisches) Framework 10 bezeichnet werden. Erst durch die Geschäftsschicht (Business Layer) 50, die die spezifischen Klassen für das Verhalten einer Anwendung und einer Komponente 5 enthält, und in der die tatsächlichen dienstleistungsspezifischen Vorgänge programmiert werden, wird das System 1 komplettiert.

Durch die Isolation der einzelnen Schichten ist realisiert, daß beispielsweise die Tätigkeit eines Business-Logik-Entwicklers nicht von einer Änderung in einer darunterliegenden Schicht (etwa einer Änderung des Betriebssystems) beeinflußt wird.

Das System 1 ist zudem in verschiedene Ebenen (Tiers) unterteilbar. Dabei ist zwischen der Aufteilung in logische und physikalische Ebenen zu unterscheiden. Die Aufteilung des Systems in zwei logische Ebenen (dicke Clients) bzw. drei logische Ebenen (dünne Clients) wird vorgenommen, da in verschiedenen logischen Ebenen Verarbeitungsprozesse unabhängig voneinander und gleichzeitig ablaufen können. In der vorliegenden bevorzugten Ausführungsform ist das System zudem in eine feinere Ebenenstruktur nach physikalischen Ebenen unterteilt.

Die oberste und damit die dem Systemnutzer nächste Ebene ist dabei die Präsentationsebene (Presentation Tier) 52. Obwohl der Server eigentlich nicht mit der Präsentationsebene 52 in Verbindung steht, muß sein Framework 10 dennoch einige Einrichtungen liefern, mit denen die Objekte der Präsentationsebene 52 kommunizieren können, und zudem bestimmen, wie präsentationsspezifisches Verhalten behandelt werden muß. Die Elemente der Präsentation betreffen die Repräsentation von Informationen, die Navigation durch diese Informationen und deren Manipulation. Das Framework 10 des Servers setzt die Verwendung einer objektorientierten Anwenderschnittstelle voraus und liefert entsprechende Einrichtungen. Die Elemente der Präsentationsebene 52 verwenden die beschreibende Information, die in Meta-Anwendungs-lnstanzen geliefert wird, um Aspekte zu definieren, wie Geschäftsobjekte und ihre Attribute betrachtet oder verwendet werden sollen. Diese Meta-Anwendungs-Information liefert eine Isolationsschicht zwischen den Präsentationsobjekten (Fenstern) und Anwendungs- oder Geschäftsobjekten. Eine zusätzliche Isolationsschicht kann durch Zugangsprivileg-Einrichtungen erreicht werden, die Serverelemente zeigen oder verstecken.

Die Anwendungsebene (Application Tier) 54 beinhaltet Klassen und Schnittstellen, die die Anwendung repräsentieren, sowie Klassen, die auf Anwendung bezogenes Komponentenverhalten in Pakete packen. Enthalten sind eine Anzahl von Klassen, die für die Interaktion mit einer Anwendung notwendig sind, sowie die fundamentale abstrakte Klasse für Anwendungskontrollklassen und Anwendungsprozeßklassen. Diese Klassen bilden die Hauptschnittstelle für Clients innerhalb der Applikationen. Sie liefern die fundamentalen Mechanismen für Kommunikation mit der Applikation, indem sie Instanzen von gewünschten Objekten erzeugen, und erlauben die Navigation zu diesen Objekten.

Zusammenfassend läßt sich deshalb vereinfacht sagen, daß die Anwendungsebene 54 die Klassen enthält, die Geschäftsprozesse modellieren, welche zugrundeliegende Geschäftsobjekte verwenden. Der Großteil der individuellen Einstellungsarbeit ist daher in dieser Ebene isoliert.

Zudem enthält die Anwendungsebene 54 die Fassadenobjekte, die die Haupteinrichtungen für die Kommunikation zwischen Komponenten 5 darstellen.

Die Klassen in der Meta-Anwendungsebene (Meta-Application Tier) 56 liefern einer Anwendung Einrichtungen, um sich selbst zu beschreiben und zu ändern. Die Meta-Anwendungsebene 56 besteht aus Klassen, die die Definition von Informationen bezüglich Aspekten von Anwendungsobjekten und Domainobjekten erlauben. Diese Klassen machen es möglich, Aspekte von Geschäftsobjekten dynamisch auf einem Meta-Level zu konfigurieren. Solche Aspekte beinhalten die Betitelung von Klassen, beinhalten weiter Formatmasken und Längen für Attribute, beinhalten Informationen, ob bestimmte Attribute obligatorisch sind usw.

Die Meta-Anwendungs-Einrichtungen liegen auf einem höheren Level als die Anwendungen und liefern generelle Funktionalität, die auf alle Anwendungen anwendbar ist.

Die Domainebene 58 weist die Geschäftsobjektklassen (business object classes) einer spezifischen Anwendungsdomain auf. In anderen Worten ist die Domainebene 58 die Ebene, die als einzige Klassen beinhaltet, welche die Geschäftsdomain einer Anwendung modellieren. Daher beschränkt sich der Arbeitsbereich für Anwendungsentwickler größtenteils auf diese Ebene.

Die Domainebene 58 besteht nahezu ausschließlich aus einer abstrakten Domainklasse, von der alle Geschäftsobjekte ihr Verhalten vererbt bekommen. Zudem enthält die Domainebene 58 Domainklassen, die jeweils Unterklassen der oben genannten abstrakten Klasse darstellen. Diese Klassen modellieren stabiles, nicht veränderliches Verhalten der zentralen Klassen einer Problemdomain. Jedes unbeständige Verhalten, das eine Domainklasse betrifft, ist in Klassen zusammengefaßt, die der Anwendungsebene 54 zugerechnet werden, aber durch die Domainklassen benutzt werden.

Die Persistenzebene (Persistence Tier) 60 ist die Ebene, die die Interaktionen zwischen Domainobjekten und einem persistenten Speicher zusammenfaßt. Somit beinhaltet sie das Verhalten, das Persistenz für Objekte liefert, nämlich ihre Speicherung und das Abrufen. Die Ebene beinhaltet ebenso die Klasse, die die Verbindungen mit der Datenbank 7 verwaltet. Insgesamt stellt sie zum einen eine Abbildung des Klassenmodells der Domainebene 58 auf das Datenmodell der Datenbank 7 dar und zum anderen unterstützt sie Mechanismen zur transaktionsgesicherten Manipulation der Daten in der Datenbank 7.

Die Funktionen der Datenbankebene 62 wurden bereits oben ausführlich beschrieben.

Die verschiedenen Variationsmöglichkeiten auf Server- bzw. Clientseite mit dem Ziel von Veränderungen oder Erweiterungen des Systems 1 lassen sich am besten anhand des Schemas in Fig. 4 verdeutlichen. Aufbauend auf dem Framework 10 sind Clientseite 70 und Serverseite 71 gesondert abgebildet. Auf der Serverseite 71 sind die Geschäftsschichtobjekte 72, die Anwendungsschichtobjekte 74 und die Meta-Anwendungsschichtobjekte 76 anskizziert. Auf Clientseite 70 sind die erforderlichen Schnittstellen 66, insbesondere GUls, ebenso enthalten wie speziell ausgebildete JavaBeans 68. Die Pfeile skizzieren die jeweiligen Wechselwirkungsmöglichkeiten zwischen Client und Server bzw. innerhalb des Clients.

Durch die spezifisch ausgebildeten JavaBeans 68 können auf Clientseite 70 vorgefertigte GUI-Einrichtungen erzeugt werden, so daß der Systemnutzer über Benutzerschnittstellen Einstellungen vornehmen kann, wodurch der Programmieraufwand reduziert wird. Durch ihre Verwendung ist es möglich, das Schnittstellenmodell des Servers auf Clientseite 70 zur Verfügung zu stellen und damit die eingesetzte Kommunikationstechnologie vor einem Client-Entwickler zu verbergen.

Somit bekommt der Systemnutzer Schnittstellen zur Verfügung, an denen er sich anhängen kann, um seine Sonderwünsche zu implementieren. Dies geschieht an speziellen lokalisierten Stellen, so daß kein grundlegender Code geändert werden muß.

Besonders hilfreich bei der Durchführung dieses Vorhabens ist das Meta-Anwendungs-Dictionary. Dieses beinhaltet eine große Menge an Informationen über eine Anwendung, ihre Klassen und die Attribute in den Klassen, weshalb das Meta-Anwendungs-Dictionary die dynamische Konfiguration von Anwendungsinformationen und Verfahrensabläufen auf einem Meta-Level erlaubt. Das eigentliche Dictionary wird durch eine Instanz repräsentiert, die als Root des Dictionary's fungiert und zusätzlich Informationen über die Anwendung als solche beinhaltet. Des weiteren beinhaltet das Dictionary den Satz von Instanzen, die Meta-Informationen für Klassen definieren.

Durch das Meta-Anwendungs-Dictionary wird also eine Menge von Eigenschaften festgelegt, die für jede Klasse im Server gelten. Somit ist eine Erweiterung bzw. Veränderung des Verhaltens des gesamten Systems 1 während der Laufzeit möglich, ohne den bestehenden Code ändern zu müssen. Diese Erweiterungen werden implementiert, indem sie von den Geschäftsklassen, die im Server aufgeführt werden, abgeleitet werden oder als neue Klassen hinzugefügt werden. Die neuen Klassen werden in den Server konfiguriert, indem die Meta-Anwendungs-Einrichtungen des Servers verwendet werden. Diese Unterklassen können die meisten der existierenden Methoden überschreiben und haben daher die Möglichkeit, die bestehende Funktionalität zu verändern oder zu erweitern.

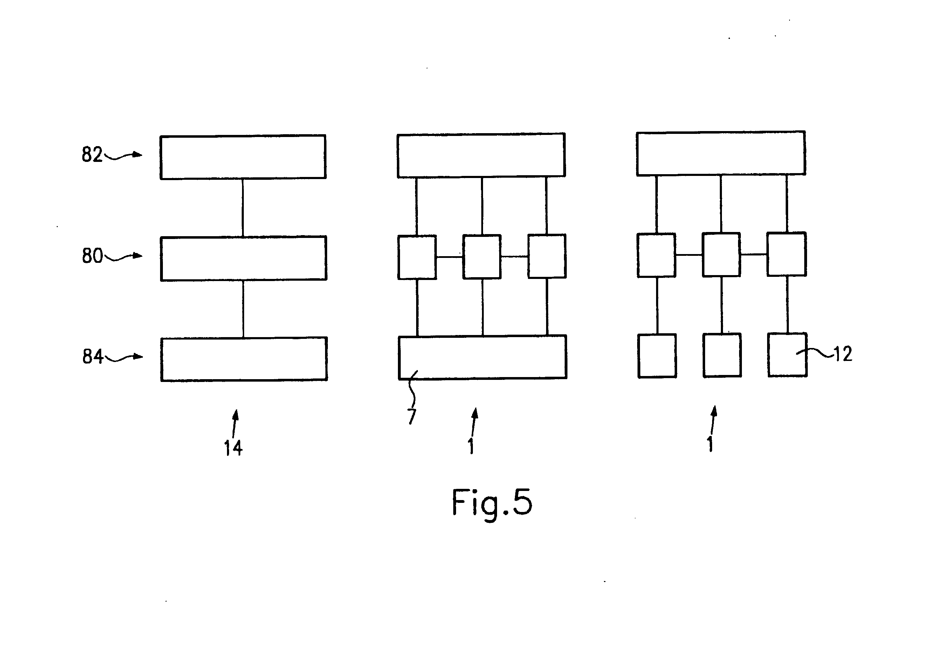

Fig. 5 zeigt eine schematische Darstellung der Entwicklung von den vorbekannten Systemen 14 zu einer ersten und einer zweiten Ausführungsform des erfindungsgemäßen Abrechnungs- und Kundenverwaltungssystems 1. Die in Fig. 5 vorgenommene Einteilung der Systeme in drei logische Ebenen für Präsentationslogik 82, Anwendungslogik 80 und Datenbank 84 ist dabei lediglich als Hintergrund für die bisher beschriebene Einteilung des erfindungsgemäßen Abrechnungs- und Kundenverwaltungssystems 1 in physikalische Ebenen anzusehen, von denen wie erwähnt bevorzugterweise mehr als drei existieren können.

In den vorbekannten Systemen 14 bildeten Präsentationslogik 82, Anwendungslogik 80 und Datenbank 17 jeweils einen großen Block mit entsprechenden Kommunikationsmöglichkeiten, die zu Fig. 1 bereits ausführlich erläutert wurden. Im erfindungsgemäßen System 1 ist es nun nicht nur möglich, die Anwendungslogik 80 entsprechend den angebotenen Dienstleistungen zu separieren, vielmehr ist es auch denkbar, daß die Datenbank 7 selbst in logisch getrennte Datenbankabschnitte 12 aufgeteilt wird, anstelle einen großen monolytischen Block zu bilden und/oder daß mehrere voneinander getrennte Datenbanken 12 existieren. Jeder Datenbankabschnitt und/oder jede getrennte Datenbank 12 ist dann genau für eine Komponente 5 zuständig, der sie Daten liefert und von der sie Daten abspeichert.

Durch das vorliegende Abrechnungs- und Kundenverwaltungssystem 1 ist es möglich, weitere Anwendungsserver entsprechend bereits vorliegenden Servern zu reproduzieren und parallel zu diesen einzusetzen. Dadurch ist das Abrechnungs- und Kundenverwaltungssystem 1 auch für Systemnutzer mit einigen Millionen abzurechnender Kunden und einer hohen Anzahl an Transaktionen geeignet.

Außerdem stellt das System 1 Mechanismen zur Verfügung, die ein über die Komponenten 5 verteiltes Transaktions- und Speichermanagement ermöglichen.

Das oben dargestellte bevorzugte Modell des Abrechnungs- und Kundenverwaltungssystems 1 ist lediglich als bevorzugte Ausführungsform aufzufassen, denkbar sind jedoch viele Abwandlungen von dieser speziellen Ausführungsform. So ist beispielsweise die Anzahl der Schichten und Ebenen nicht exakt durch die in obigem Beispiel beschriebene Anzahl definiert, sondern kann beliebig nach oben oder unten variiert werden, solange die Unterteilung in mindestens zwei Schichten und mindestens zwei Ebenen beibehalten wird. Das System 1 läßt sich auch beliebig auf dünne oder dicke Clients anwenden. Die genaue Aufteilung in Komponenten 5, die zu Fig. 1 erläutert wurde, ist ebenso lediglich als Beispiel aufzufassen. Demnach können auch andere Dienstleistungen des Abrechnungs- und Kundenverwaltungssektors zu einer entsprechenden Komponente 5 zusammengefaßt werden, solange die allgemeinen Kriterien für eine Komponente 5 erfüllt werden. Auch die Verwendung von Java, CORBA und TopLink ist lediglich eine Frage des aktuellen Marktangebots; genauso ist es denkbar, andere Produkte mit ähnlichen Eigenschaften für die vorliegenden Zwecke einzusetzen.

Besonders sei darauf hingewiesen, daß das Abrechnungs- und Kundenverwaltungssystem 1 nicht auf den Einsatz im Telekommunikationsbereich beschränkt ist. Vielmehr ist es durchaus möglich, das System 1 in der gesamten Verbraucherindustrie (Strom, Wasser, Gas, Internet etc.) einzusetzen bzw. Teile des Systems 1 zur reinen Kundenverwaltung in Betrieben zu verwenden.

## Patentansprüche

1. Abrechnungs- und Kundenverwaltungssystem (1), insbesondere für Kommunikationsdienste, mit
mindestens einer Datenbank (7), in der Daten gespeichert und abgerufen werden können, und die bevorzugterweise als Server ausgebildet ist,
einer Mehrzahl von Clients, die mit der mindestens einen Datenbank (7) kommunizieren, und/oder mindestens einem Anwendungsserver mit zugehörigen Clients, der mit der mindestens einen Datenbank (7) kommuniziert, und
einem entsprechenden Framework (10),
wobei dem Benutzer des Systems (1) entsprechende Dienstleistungen gemäß den jeweils gewünschten Abrechnungs- oder Kundenverwaltungsvorgängen zur Nutzung offen stehen,
**dadurch gekennzeichnet, daß**
das System (1) eine verteilte Komponentenarchitektur aufweist, in der entsprechend den angebotenen Dienstleistungen Komponenten (5) ausgebildet sind, die über Schnittstellen direkt miteinander kommunizieren können.

2. Abrechnungs- und Kundenverwaltungssystem (1) nach Anspruch 1, **dadurch gekennzeichnet, daß** das System (1) in mindestens zwei hierarchisch angeordnete Schichten (Layers) zunehmenden Abstraktionsgrades unterteilt ist, wobei die jeweils nächstuntere die über ihr liegende Schicht nach unten isoliert, so **daß** Implementierungsdetails der unterliegenden Schichten den darüberliegenden Schichten verborgen bleiben.

3. Abrechnungs- und Kundenverwaltungssystem (1) nach Anspruch 1 oder 2, **dadurch gekennzeichnet, daß** das System (1) in mindestens zwei hierarchisch angeordnete Ebenen (Tiers) entsprechend den technischen Aufgaben unterteilt ist, wobei die Elemente aller Ebenen zusammen die Aufgaben von der Speicherung bis zur Präsentation der Daten vollständig erfüllen.

4. Abrechnungs- und Kundenverwaltungssystem (1) nach einem der Ansprüche 1 bis 3, **dadurch gekennzeichnet, daß** das System (1) eine unterste Basisschicht (Base Layer) (40) aufweist, die fundamentales Systemverhalten beinhaltet.

5. Abrechnungs- und Kundenverwaltungssystem (1) nach einem der Ansprüche 1 bis 4, **dadurch gekennzeichnet, daß** das System (1) eine über der Basisschicht (40) angeordnete allgemeine Schicht (Common Layer) (42) aufweist, die Abstraktionen von Klassen der Basisschicht (40) und Klassen beinhaltet, die allgemeine Einrichtungen für alle Schichten und Ebenen liefern.

6. Abrechnungs- und Kundenverwaltungssystem (1) nach einem der Ansprüche 1 bis 5, **dadurch gekennzeichnet, daß** das System (1) eine über der allgemeinen Schicht (42) angeordnete technische Unterstützungsschicht (Technical Services Layer) (44) aufweist, die software-technische Dienste anbietet.

7. Abrechnungs- und Kundenverwaltungssystem (1) nach einem der Ansprüche 1 bis 6, **dadurch gekennzeichnet, daß** das System (1) eine über der technischen Unterstützungsschicht (44) angeordnete Anwendungsschicht (Application Layer) (46) aufweist, die die Dienste der technischen Unterstützungsschicht (44) zu einer abstrakten Anwendung zusammenfaßt sowie Mechanismen zur Beschreibung der Elemente der Domainebene (58) auf einer Meta-Ebene erlaubt.

8. Abrechnungs- und Kundenverwaltungssystem (1) nach einem der Ansprüche 1 bis 7, **dadurch gekennzeichnet, daß** das System (1) eine über der Anwendungsschicht (46) angeordnete Geschäftsschicht (Business Layer) (50) aufweist, die die domainspezifischen Klassen für jede Komponente (5) beinhaltet.

9. Abrechnungs- und Kundenverwaltungssystem (1) nach einem der Ansprüche 1 bis 8, **dadurch gekennzeichnet, daß** das System (1) eine Präsentationsebene (Presentation Tier) (52) aufweist, die die Präsentation der Daten und Funktionen der Anwendung für den Systemnutzer implementiert.

10. Abrechnungs- und Kundenverwaltungssystem (1) nach einem der Ansprüche 1 bis 9, **dadurch gekennzeichnet, daß** das System (1) eine Anwendungsebene (Application Tier) (54) aufweist, die Klassen sowie Schnittstellen beinhaltet, die die Anwendung repräsentieren.

11. Abrechnungs- und Kundenverwaltungssystem (1) nach einem der Ansprüche 1 bis 10, **dadurch gekennzeichnet, daß** das System (1) eine Meta-Anwendungsebene (Meta-Application Tier) (56) aufweist, in der Klassen beinhaltet sind, die einer Anwendung Mittel liefern, um sich selbst zu beschreiben.

12. Abrechnungs- und Kundenverwaltungssystem (1) nach einem der Ansprüche 1 bis 11, **dadurch gekennzeichnet, daß** das System (1) eine Domainebene (Domain Tier) (58) aufweist, die die Geschäftsobjektklassen (business object classes) einer spezifischen Anwendungsdomain beinhalten.

13. Abrechnungs- und Kundenverwaltungssystem (1) nach einem der Ansprüche 1 bis 12, **dadurch gekennzeichnet, daß** das System (1) eine Persistenzebene (Persistence Tier) (60) aufweist, die zum einen eine Abbildung des Klassenmodells der Domainebene (58) auf das Datenmodell der mindestens einen Datenbank (7) darstellt und zum anderen Mechanismen zur transaktionsgesicherten Manipulation der Daten in der mindestens einen Datenbank (7) unterstützt.

14. Abrechnungs- und Kundenverwaltungssystem (1) nach einem der Ansprüche 1 bis 13, **dadurch gekennzeichnet, daß** das System (1) ein Meta-Anwendungs-Dictionary (Meta-Application Dictionary) aufweist, das Informationen über eine Komponente (5), ihre Klassen und die Attribute in den Klassen beinhaltet und die dynamische Konfiguration von Anwendungsinformationen und Verarbeitung auf einem Meta-Level erlaubt.

15. Abrechnungs- und Kundenverwaltungssystem (1) nach einem der Ansprüche 1 bis 14, **dadurch gekennzeichnet, daß** das System (1) Einrichtungen (68) aufweist, die das Schnittstellenmodell des Servers auf Clientseite (70) zur Verfügung stellen und damit die eingesetzte Kommunikationstechnologie vor einem Client-Entwickler verbergen.

16. Abrechnungs- und Kundenverwaltungssystem (1) nach einem der Ansprüche 1 bis 15, **dadurch gekennzeichnet, daß** das System (1) definierte Schnittstellen sowie Mechanismen zur Anfrageverteilung anbietet, so **daß** mehrere gleichartige Anwendungsserver dem System (1) hinzugefügt werden können.

17. Abrechnungs- und Kundenverwaltungssystem (1) nach einem der Ansprüche 1 bis 16, **dadurch gekennzeichnet, daß** das System (1) die Möglichkeit bietet, Komponenten (5) auszutauschen oder hinzuzufügen.

18. Abrechnungs- und Kundenverwaltungssystem (1) nach einem der Ansprüche 1 bis 17, **dadurch gekennzeichnet, daß** Klassen erweitert bzw. neue Klassen hinzugefügt werden können, um eine Komponente während der Ausführung unter Verwendung von Meta-Anwendungs-Einrichtungen zu verändern.

19. Abrechnungs- und Kundenverwaltungssystem (1) nach einem der Ansprüche 1 bis 18, **dadurch gekennzeichnet, daß** die Datenbank (7) als eine Vielzahl unabhängiger Datenbankabschnitte (12) ausgebildet ist und/oder mehrere unabhängige Datenbanken (12) existieren, wobei die unabhängigen Datenbankabschnitte und/oder unabhängigen Datenbanken (12) jeweils mit nur einer Komponente (5) kommunizieren.

20. Abrechnungs- und Kundenverwaltungssystem (1) nach einem der Ansprüche 1 bis 19, **dadurch gekennzeichnet, daß** das System (1) Mechanismen zur Verfügung stellt, die ein über Komponenten (5) verteiltes Transaktions- und Speichermanagement ermöglichen.
